(19) Europäisches Patentamt
European Patent Office
Office européen des brevets

(11) EP 0 677 067 B1

(12) **EUROPÄISCHE PATENTSCHRIFT**

(45) Veröffentlichungstag und Bekanntmachung des Hinweises auf die Patenterteilung:
**02.04.1997 Patentblatt 1997/14**

(21) Anmeldenummer: **94903823.6**

(22) Anmeldetag: **17.12.1993**

(51) Int Cl.6: **C08F 226/06**, C11D 3/37, C11D 3/00

(86) Internationale Anmeldenummer:
**PCT/EP93/03598**

(87) Internationale Veröffentlichungsnummer:
**WO 94/14861 (07.07.1994 Gazette 1994/15)**

(54) **VINYLPYRROLIDON- UND VINYLIMIDAZOL-COPOLYMERISATE, VERFAHREN ZU IHRER HERSTELLUNG UND IHRE VERWENDUNG IN WASCHMITTELN**

COPOLYMERISATES OF VINYL PYRROLIDONE AND VINYL IMIDAZOLE, A PROCESS FOR PRODUCING THEM AND THEIR USE IN DETERGENTS

COPOLYMERISATS DE VINYLPYRROLIDONE ET DE VINYLIMIDAZOL, LEURS PROCEDES DE PREPARATION ET LEUR UTILISATION

(84) Benannte Vertragsstaaten:
**DE ES FR GB IT**

(30) Priorität: **29.12.1992 DE 4244386**

(43) Veröffentlichungstag der Anmeldung:
**18.10.1995 Patentblatt 1995/42**

(73) Patentinhaber: **BASF Aktiengesellschaft**
**67063 Ludwigshafen (DE)**

(72) Erfinder:
- **SCHADE, Christian**
  **D-67061 Ludwigshafen (DE)**
- **DETERING, Juergen**
  **D-67117 Limburgerhof (DE)**
- **TRIESELT, Wolfgang**
  **67063 Ludwigshafen (DE)**

(56) Entgegenhaltungen:
**DE-A- 2 232 353** **DE-A- 2 814 287**
**US-A- 5 247 040**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 677 067 B1

## Beschreibung

Die Erfindung betrifft Copolymerisate von 1-Vinylpyrrolidon und 1-Vinylimidazolen, die in Gegenwart von wasserunlöslichen Polymeren, die mindestens eine ethylenisch ungesättigte Doppelbindung und/oder eine Mercaptogruppe im Molekül enthalten, herstellbar sind, ein Verfahren zur Herstellung der Copolymerisate durch Copolymerisieren von 1-Vinylpyrrolidon und 1-Vinylimidazolen in Gegenwart von wasserunlöslichen Polymeren, die mindestens eine ethylenisch ungesättigte Doppelbindung und/oder eine Mercaptogruppe im Molekül enthalten, in Lösemitteln in Gegenwart von Rakikale bildenden Initiatoren sowie die Verwendung der so herstellbaren Copolymerisate und von Copolymerisaten aus 1-Vinylpyrrolidon und Styrol als Zusatz zu Waschmitteln zur Inhibierung der Farbstoffübertragung während des Waschvorgangs und Waschmittel, die die genannten Copolymerisate enthalten.

Aus der DE-B-22 32 353 sind Wasch- und Reinigungsmittelmischungen bekannt, die im wesentlichen aus 95 bis 60 Gew.-% nichtionischen Detergentien und 5 bis 40 Gew.-% eines teilweise oder vollständig wasserlöslichen Polyvinylpyrrolidons bestehen und im wesentlichen von anionischen oberflächenaktiven Mitteln frei sind. Die Polymerisate des Vinylpyrrolidons verhindern beim Waschvorgang den Farbstoffübergang von gefärbten auf weiße Textilien. Die Polymerisate des Vinylpyrrolidons haben Molekulargewichte in dem Bereich von etwa 10 000 bis etwa 1 000 000. Es kommen sowohl Homopolymerisate als auch Copolymerisate des Vinylpyrrolidons in Betracht. Als geeignete Comonomere werden Acrylnitril oder Maleinsäureanhydrid genannt. Die Wirksamkeit der Vinylpyrrolidonpolymerisate als Farbübertragungsinhibitor wird jedoch von anionischen Tensiden stark beeinträchtigt.

Aus der DE-A-28 14 287 sind Wasch- und Reinigungsmittel bekannt, die anionische und/oder nichtionische Tenside, Gerüstsubstanzen und sonstige übliche Waschmittelzusätze sowie als verfärbungsinhibierende Additive 0,1 bis 10 Gew.-% an wasserlöslichen bzw. wasserdispergierbaren Homo- bzw. Copolymerisaten des N-Vinylimidazols enthalten. Die Polymeren haben in 1 gew.-%iger wäßriger Lösung bei 20°C eine spezifische Viskosität von 0,01 bis 5.

Aus der CA-A-2 071 401 ist ein zweistufiges Verfahren zur Herstellung von wäßrigen Copolymeremulsionen bekannt. In der ersten Stufe des Verfahrens wird ein Makromonomer durch Polymerisieren eines monoethylenisch ungesättigten Monomers in Gegenwart mindestens eines Olefins, das eine Mercaptogruppe enthält, hergestellt. In der zweiten Verfahrensstufe werden ethylenisch ungesättigte Monomere in Gegenwart der in der ersten Stufe hergestellten Makromonomeren polymerisiert. Als ethylenisch ungesättigte Monomere kommen auch N-Vinylverbindungen wie N-Vinylpyrrolidon in Betracht. Die wäßrigen Copolymeremulsionen werden beispielsweise als Beschichtungsmittel oder als Bestandteil von Klebestoffen verwendet.

Die oben angegebenen Polymeren haben den Nachteil, daß sie weder biologisch abbaubar noch durch Adsorption am Klärschlamm aus dem Abwasser entfernt werden können.

Der vorliegenden Erfindung liegt die Aufgabe zugrunde, neue Stoffe und ein Verfahren zur Herstellung der neuen Stoffe zur Verfügung zu stellen. Außerdem ist es Aufgabe der Erfindung, einen Waschmittelzusatz aufzuzeigen, der eine Farbstoffübertragung während des Waschvorgangs verhindert und der zumindest teilweise durch Adsorption am Klärschlamm aus dem Abwasser eliminierbar ist.

Die Aufgaben werden gelöst mit Copolymerisaten, die erhältlich sind durch radikalisch initiierte Copolymerisation von Mischungen aus

(a) 20 bis 95 Gew.-% 1-Vinylpyrrolidon, 1-Vinylimidazolen der Formel (I)

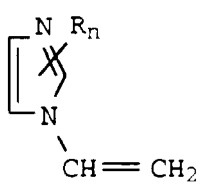

(I),

in der

R = H, $CH_3$, $C_2H_5$ und
n = 1 bis 3,

deren Gemische sowie Mischungen aus 1-Vinylpyrrolidon und/ oder 1-Vinylimidazolen der Formel I, die bis zu 20 Gew.-% andere monoethylenisch ungesättigte Monomere enthalten, und

(b) 5 bis 80 Gew.-% wasserunlöslichen Polymeren aus der Gruppe der ungesättigten Polyester, der Homopolymerisate des Butadiens, der Copolymerisate von Butadien mit Styrol, Acrylnitril, Acrylestern von Alkoholen mit 1

bis 8 Kohlenstoffatomen, Isopren, Vinylethern mit 1 bis 18 C-Atomen in der Alkylkette und Acrylsäure, der Mercaptoalkylgruppen tragenden Polysiloxane und der Bis(thiol)-polytetrahydrofurane.

Gegenstand der Erfindung ist außerdem ein Verfahren zur Herstellung von Copolymerisaten, das dadurch gekennzeichnet ist, daß man

(a) 20-95 Gew.-% 1-Vinylpyrrolidon, 1-Vinylimidazole der Formel I, deren Gemische oder Mischungen aus 1-Vinylpyrrolidon und/oder 1-Vinylimidazolen, die bis zu 20 Gew.-% andere monoethylenisch ungesättigte Monomere enthalten, und

(b) 5 bis 80 Gew.-% wasserunlöslichen Polymeren aus der Gruppe der ungesättigten Polyester, der Homopolymerisate des Butadiens, der Copolymerisate von Butadien mit Styrol, Acrylnitril, Acrylestern von Alkoholen mit 1 bis 8 Kohlenstoffatomen, Isopren, Vinylethern mit 1 bis 18 C-Atomen in der Alkylkette und Acrylsäure, der Mercaptoalkylgruppen tragenden Polysiloxane und der Bis(thiol)-polytetrahydrofurane,

in Wasser, Alkoholen, Estern oder Ketonen mit Siedepunkten von jeweils unterhalb von 135°C oder Mischungen der genannten Lösemittel in Gegenwart Radikale bildender Initiatoren sowie gegebenenfalls von Schutzkolloiden und Tensiden copolymerisiert.

Die zuletzt genannte Aufgabe wird erfindungsgemäß gelöst durch die Verwendung der obengenannten Copolymerisate als Zusatz zu Waschmitteln zur Inhibierung der Farbstoffübertragung während des Waschvorgangs sowie mit Waschmitteln auf Basis von Tensiden und gegebenenfalls Buildern sowie anderen üblichen Bestandteilen, wenn die Waschmittel 0,1 bis 10 Gew.-% eines erfindungsgemäßen Copolymerisats enthalten.

Monomere der Gruppe (a) sind 1-Vinylpyrrolidon und 1-Vinylimidazole der Formel (I)

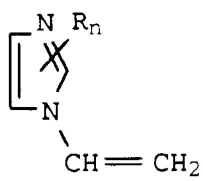 (I),

in der R = H, $CH_3$, $C_2H_5$ und n = 1 bis 3 bedeuten.

Der Substituent R kann in 2-, 4- und 5-Stellung am Imidazolring stehen. Sofern der Substituent R eine Methyl- bzw. Ethylgruppe bedeutet, so können diese Gruppen die 3 substituierbaren Wasserstoffatome am Imidazolring in 2-, 4- und 5-Stellung ersetzen. In Betracht kommende Verbindungen sind beispielsweise 1-Vinylimidazol, 1-Vinyl-2-methylimidazol, 1-Vinyl-2,4-dimethylimidazol, 1-Vinyl-2,4,5-trimethylimidazol, 1-Vinyl-2-ethyl-imidazol, 1-Vinyl-4,5-diethylimidazol und 1-Vinyl-2,4,5-triethylimidazol. Man kann auch Mischungen der genannten Monomere im beliebigen Verhältnis einsetzen, z.B. Mischungen aus 1-Vinylpyrrolidon und 1-Vinylimidazol oder Mischungen aus 1-Vinylimidazol und 1-Vinyl-2-methylimidazol.

Die Monomeren der Gruppe (a) können entweder allein oder in Mischung untereinander mit bis zu 20 Gew.-% anderen monoethylenisch ungesättigten Monomeren bei der Copolymerisation eingesetzt werden. Hierbei handelt es sich vorzugsweise um Monomere, die ein basisches Stickstoffatom enthalten, entweder in Form der freien Basen oder in quaternierter Form sowie um Monomere, die über eine Amidogruppe verfügen, die gegebenenfalls substituiert sein kann. Geeignete Monomere dieser Art sind beispielsweise N,N'-Dialkylaminoalkyl(meth)acrylate, z.B. Dimethylaminoethylacrylat, Dimethylaminoethylmethacrylat, Diethylaminoethylacrylat, Diethylaminoethylmethacrylat, Dimethylaminopropylacrylat, Dimethylaminopropylmethacrylat, Diethylaminopropylacrylat, Diethylaminopropylmethacrylat, Dimethylaminobutylacrylat, Dimethylaminobutylmethacrylat, Dimethylaminoneopentylacrylat, Dimethylaminoneopentylmethacrylat. Weitere geeignete basische Monomere dieser Gruppe sind N, N'-Dialkylaminoalkyl(meth) acrylamide, z. B. N,N'-Di-$C_1$-bis $C_3$-Alkylamino-$C_2$-$C_6$-Alkyl(meth)acrylamide, wie Dimethylaminoethylacrylamid, Dimethylaminoethylmethacrylamid, Diethylaminoethylacrylamid, Diethylaminoethylmethacrylamid, Dipropylaminoethylacrylamid, Dipropylaminoethylmethacrylamid, Dimethylaminopropyl) acrylamid, Dimethylaminopropylmethacrylamid, Diethylaminopropylacrylamid, Diethylaminopropylmethacrylamid, Dimethylaminoneopentylacrylamid, Dimethylaminoneopentylmethacrylamid und Dialkylaminobutylacrylamid. Weitere geeignete Monomere dieser Gruppe sind 4-Vinylpyridin, 2-Vinylpyridin und/oder Diallyl(di)alkylamine, bei denen die Alkylgruppe 1 bis 12 C-Atome aufweist. Die oben genannten basischen Monomeren werden bei der Copolymerisation in Form der freien Basen, der Salze mit organischen oder anorganischen Säuren oder in quaternierter Form eingesetzt. Zur Salzbildung eignen sich beispielsweise Carbonsäuren mit 1 bis 7 Kohlenstoffatomen, z.B. Ameisensäure, Essigsäure oder Propionsäure, Benzolsulfonsäure, p-Toluolsulfonsäure oder anorganische Säuren wie Halogenwasserstoffsäuren, beispielsweise Salzsäure oder Bromwasserstoffsäure. Die oben beispielhaft genannten basischen Monomeren können auch in quaternierter Form eingesetzt werden. Zur Quaternierung eignen sich beispielsweise Alkylhalogenide mit 1 bis 18 C-Atomen in der Alkylgruppe, z. B. Methylchlorid, Methylbromid, Methyljodid, Ethylchlorid, Propylchlorid, Hexylchlorid, Dodecylchlorid, Laurylchlorid und Benzylhalogenide, insbesondere Benzylchlorid und Benzylbromid. Die Quaternierung der stickstoffhaltigen basischen Monomeren kann auch durch Umsetzung dieser Verbindungen mit Dialkylsulfaten, insbesondere Diethylsulfat oder Dimethylsulfat, vorgenommen werden. Beispiele für quaternierte Monomere dieser Gruppe sind Trimethylammoniumethylmethacrylatchlorid, Dimethylethylammoniumethylmethacrylatethylsulfat und Dimethylethylammoniumethylmethacrylamidethylsulfat. Weitere geeignete Monomere sind l-Vinylimidazoliumverbindungen der Formel

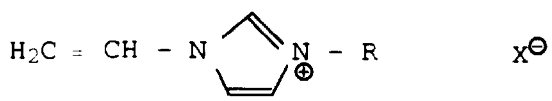 ,

in der R = H, $C_1$-bis $C_{18}$-Alkyl oder Benzyl und $X^{\ominus}$ ein Anion ist.

Das Anion kann ein Halogenion oder auch der Rest einer anorganischen oder organischen Säure sein. Beispiele für quaternierte 1-Vinylimidazole der Formel I sind 3-Methyl-1-vinylimidazoliumchlorid, 3-Benzyl-1-vinyl-imidazaliumchlorid, 3-n-Dodecyl-1-vinylimidazoliumbromid und 3-n-Octadecyl-1-vinylimidazoliumchlorid.

Falls die obengenannten Monomeren zusammen mit Vinylpyrrolidon oder den Vinylimidazolen eingesetzt werden, sind sie in der Mischung vorzugsweise in einer Menge von 1 bis 18 Gew.-% enthalten. Die Monomeren der Gruppe (a) werden bei der Copolymerisation in Mengen von 20 bis 95, vorzugsweise 30 bis 90 Gew.-% eingesetzt.

Als Komponente (b) die im Polymerisationsansatz zu 5 bis 80, vorzugsweise 10 bis 70 Gew.-% eingesetzt wird, kommen wasserunlösliche Polymere in Betracht, die mindestens eine ethylenisch ungesättigte Doppelbindung und/oder eine Mercaptogruppe im Molekül enthalten. Das mittlere Molekulargewicht $M_w$ der wasserunlöslichen Polymeren beträgt beispielsweise mindestens 500 und liegt vorzugsweise in dem Bereich von 800 bis 200 000. Das mittlere Molekulargewicht mancher Polymerisate der Komponente (b) liegt oberhalb des angegebenen Bereichs und kann nicht eindeutig bestimmt werden. Dies gilt beispielsweise für Polybutadiene, die teilweise vernetzte Strukturen enthalten.

Die Polymeren (b) sind wasserunlöslich. Unter wasserunlöslich soll im vorliegenden Zusammenhang bereits ein Polymer verstanden werden, von dem sich höchstens 0,1 Gew.-% in Wasser lösen.

Die in Betracht kommenden Polymeren können eine Vinyloxy-, Vinyl-, Allyl-, Acryloyl-, Methacryloyl-, Phenylvinyl- oder Isopropenylphenyl-Einheit als Endgruppe aufweisen. Sie können verschiedene chemische Strukturen besitzen und Polykondensate, Polyadditionsprodukte oder Polymerisate sein, z.B. Polyester, Polyamide, Polytetrahydrofurane, Polysiloxane, Epoxyharze, Polyurethane, Polystyrole, Polyacrylate oder Polyisobutene sein. Derartige Polymere (b) werden in der Literatur meist als Makromonomere bezeichnet. Solche Verbindungen werden z.B. beschrieben in P.F. Rempp und E. Frank, Adv. Polym. Sci. 58, 1-53 (1984), oder Y. Kawakami in Encycl. Polym. Sci. Engng. Vol. 9, 195-204, John Wiley: New York 1987. Die Polymere können auch mehr als eine der beschriebenen vinylischen Endgruppen enthalten. Sie werden dann oft als polymere Vernetzer bezeichnet. Außerdem kommen als Polymere der Gruppe (b) Verbindungen in Betracht, die mindestens eine C-C-Doppelbindung in der Hauptkette enthalten wie beispielsweise Polybutadiene oder ungesättigte Polyester.

Die Herstellung der Polymere (b) ist dem Fachmann bekannt. So können die als Makromonomere bezeichneten Verbindungen erhalten werden, indem eine das Polymer aufbauene Reaktion durch ein Vinyl-Gruppen tragendes Reagens gestartet oder abgebrochen wird, wobei die Vinylgruppe in das Polymer eingebaut wird. So können z.B. lebende anionische Polymere von Styrol oder Alkyl(meth)acrylaten mit Allylhalogeniden, p-Chlormethyl-styrol, (Meth)acryloylchlorid, Glycidylmethyacrylat, 1-Isopropenyl-3-[2-(methyl-2-isocyanato)ethyl]benzol oder Methacroylisocyanat zu entsprechenden Markomonomeren umgesetzt werden. Entsprechend können Hexamethylcyclotrisiloxan oder Octamethylcyclotetrasiloxan mit Alkalialkoholaten anionisch polymerisiert und dann mit reaktiven Methacrylderivaten zu Methacryloyl-terminierten Polydimethylsiloxanen umgesetzt werden. Ein anderer prinzipiell möglicher Weg ist es, ein Präpolymer mit einer definierten Endgruppe durch Verwendung geeigneter Initiatoren, Chain-Transfer- oder Abbruch-Reagentien herzustellen. Die Endgruppe des Präpolymerisates wird dann in einer zweiten Stufe mit einer eine Vinylgruppe tragenden Verbindung umgesetzt, wobei die Vinylgruppe erhalten bleibt. Polymerisationen in Gegenwart von Thioglycolsäure führen beispielsweise zu Carboxylgruppen tragenden Polymerisaten, die dann mit Hydroxyethylmethacrylat zu einem Makromonomer verestert werden können. Kondensations- und Additionsreaktionen führen ebenfalls häufig zu geeigneten Präpolymeren, die über einen definierten Gehalt an umsetzbaren Gruppen verfügen. Polymere Vernetzer können in analoger Weise zu diesen als Makromonomere bezeichneten Verbindungen erhalten werden. Am häufigsten wird dazu ein bi- oder monofunktionelles Polymer mit einer geeigneten Vinylverbindung umgesetzt. Beispielsweise können polymere Diole und Diamine durch eine (Meth)acrylverbindung in die entsprechenden (Meth)acrylester oder -amide überführt werden. Polydimethylsiloxane können z.B. durch entsprechende Reaktionsführung mit endständigen OH-Gruppen erhalten und dann in die entsprechende Methacrylsäureester umgewandelt werden.

Andere geeignete Polymere der Gruppe (b) sind Polykondensate oder Polyadditionsprodukte, die partiell aus ethylenisch ungesättigten Bausteinen dargestellt werden und bei denen mindestens eine Doppelbindung im Polymer erhalten geblieben ist. Beispiele für derartige Polymere sind Polyester oder Polyamide, die jeweils unter teilweisem Einsatz monoethylenisch ungesättigter Dicarbonsäuren wie Maleinsäure, Itaconsäure oder Fumarsäure gewonnen wurden. Weitere geeignete ungesättigte Polyester können auch durch teilweisen Einsatz eines ungesättigten Diols wie But-2-en-1,4-diol erhalten werden. Geeignete Polykondensate sind auch zugänglich durch teilweisen Einsatz ungesättigter Carbonsäurealkohole und Carbonsäureamide bei der Umsetzung mit gesättigter Carbonsäurealkoholen, Lactonen, Carbonsäureamiden und Lactamen. Beispiele für solche Verbindungen sind Copolyester mit Ricinolsäure. Die Herstellung der Polyester und Polyamide ist dem Fachmann bekannt. Sie sind beispielsweise erhältlich durch Cokondensation von gesättigten Dicarbonsäuren wie aliphatischen Dicarbonsäuren mit 2 bis 12 Kohlenstoffatomen im Molekül, beispielsweise Bernsteinsäure und Adipinsäure, und aromatischen Dicarbonsäuren wie Phthalsäure, Isophthalsäure und Terephthalsäure mit ungesättigten Dicarbonsäuren wie Maleinsäure, Fumarsäure oder Itaconsäure, und Diolen wie aliphatischen Diolen, beispielsweise Ethylenglycol, Propylenglycol, Butandiol, Hexandiol und Neopentyldiglycol, Polyethylenglycolen, Polytetrahydrofuranen und aromatischen Diolen wie Di(hydroxyphenyl)dimethylmethan und Dihydroxydiphenylsulfon, oder Diaminen wie aliphatischen Diaminen, beispielsweise Ethylendiamin, Propylendiamin, Hexamethylendiamin und 4,4'-Diaminodicyclohexyldiamin, Polyethylenglycoldiaminen und aromatischen Diaminen wie p- und m-Phenylendiamin. Die Dicarbonsäuren können sowohl in dieser Form oder als Anhydride oder Ester eingesetzt werden. Besonders bevorzugt sind ungesättigte Polyester, die Maleinsäure-, Fumarsäure-, Itaconsäure- oder But-2-en-1,4-diol-Baugruppen enthalten. Weitere geeignete Polymere der Gruppe (b) sind Homo- und Copolymere von Isopren, Butadien oder Norbornen. Besonders bevorzugt werden Homopolymerisate des Butadiens oder Copolymerisate, die Butadien zusammen mit anderen Comonomeren wie Styrol, Acrylnitril, Acrylestern von Alkoholen mit 1 bis 8 Kohlenstoffatomen wie Ethylacrylat, Butylacrylat und Ethylhexylacrylat, Isopren, Vinlyethern mit 1 bis 18 Kohlenstoffatomen in der Alkylkette und Acrylsäure einpolymerisiert enthalten. Solche Polymerisate sind nach verschiedenen ionischen, metallkatalysierten oder radikalischen Verfahren zugänglich, beispielsweise Polybutadienöle durch anionische Polymerisation oder die oft als Synthesekautschuke bezeichneten Styrol-Butadiencopolymere durch Polymerisation in wäßriger Dispersion.

Als Komponente (b) eignen sich ebenfalls alle wasserunlöslichen Polymere, die mindestens eine Mercaptogruppe im Molekül enthalten. Die Mercaptogruppen bzw. Thiolgruppen können endständig oder in einer Seitenkette im Polymer enthalten sein. Das Polymer selbst kann verschiedene chemische Strukturen besitzen und Polykondensate, Polyadditionsverbindungen oder Polymerisate umfassen. Beispiele sind Mercaptoalkylgruppen tragende Polysiloxane, z.B. Co(dimethylsiloxy) [(mercaptopropyl)methylsiloxane] mit einem Anteil an Mercaptopropyl(methyl)siloxy-Gruppen von 1 bis 10 mol-%.

Weitere Beispiele für Verbindungen der Komponente (b) sind Bis(thiol)-polytetrahydrofurane oder Copolymerisate von monoethylenisch ungesättigten Carbonsäuren, die mit Thioalkanolen, wie Mercaptoethanol, Mercaptopropanol, Mercaptobutanol, Glyceryldithioglycolat, Thiodiglycol, Ethylthioethanol, Dodecylthioethanol, ethoxylierten Alkylmercaptanen und Methylmercaptoethanol oder Thioalkanaminen wie 2-Amino-5-mercapto-thiadiazol, Aminomercaptoethan und Aminomercaptopropan umgesetzt worden sind. Die Thioalkanole bzw. Thioalkanamine liegen dabei entweder in veresterter oder amidierter Form vor. Die Copolymerisate leiten sich beispielsweise von Acrylsäure, Methacrylsäure, Maleinsäure oder Itaconsäure ab. Geeignete Comonomere sind Styrol, 1-Alkene mit 4 - 30 Kohlenstoffatomen, Isobuten, Vinylalkylether mit 1 bis 18 Kohlenstoffatomen im Molekül und Alkyl(meth)acrylate mit 1 bis 18 Kohlenstoffatomen im Molekül.

Die erfindungsgemäßen Copolymerisate werden dadurch hergestellt, daß man

(a) 20 bis 95 Gew.-% 1-Vinylpyrrolidon, 1-Vinylimidazole der oben angegebenen Formel I, deren Gemische oder Mischungen aus 1-Vinylpyrrolidon und/oder 1-Vinylimidazolen, die bis zu 20 Gew.-% andere monoethylenisch ungesättigte Monomere enthalten und

(b) 5 bis 80 Gew.-% wasserunlöslichen Polymeren aus der Gruppe der ungesättigten Polyester, der Homopolymerisate des Butadiens, der Copolymerisate von Butadien mit Styrol, Acrylnitril, Acrylestern von Alkoholen mit 1 bis 8 Kohlenstoffatomen, Isopren, Vinylethern mit 1 bis 18 C-Atomen in der Alkylkette und Acrylsäure, der Mercaptoalkylgruppen tragenden Polysiloxane und der Bis(thiol)-polytetrahydrofurane,

in Wasser, Alkoholen, Estern oder Ketonen mit Siedepunkten von jeweils unterhalb von 135°C oder Mischungen der genannten Lösemittel in Gegenwart Radikale bildender Initiatoren sowie gegebenenfalls von Schutzkolloiden und Tensiden copolymerisiert. Die Copolymerisation der Komponenten (a) und (b) kann nach allen Methoden der Lösungs-, Emulsions- oder Fällungspolymerisation durchgeführt werden. Die Konzentration der Komponenten (a) und (b) in den

genannten Lösemitteln ist nicht kritisch und liegt vorteilhafterweise in dem Bereich von 1 bis 80, vorzugsweise 20 bis 60 Gew.-%. Als Lösemittel kommen beispielsweise Methanol, Ethanol, Isopropanol, n-Propanol, n-Butanol, Isobutanol, tert.Butanol, Essigsäuremethylester, Essigsäureethylester, Essigsäureisopropylester, Essigsäure-n-propylester, Propionsäuremethylester, Propionsäureethylester, Methylethylketon, Aceton und Diethylketon in Betracht. Die Alkohole, Ketone und Ester sollen vorzugsweise einen Siedepunkt unterhalb von 135°C haben. Die organischen Lösemittel werden nach Beendigung der Copolymerisation abdestilliert, so daß ein pulverförmiges Copolymerisat anfällt, oder durch Wasser ausgetauscht, so daß man eine wäßrige Dispersion der Copolymerisate erhält.

Die Copolymerisate können auch bevorzugt durch Copolymerisieren der Komponenten (a) und (b) in Wasser hergestellt werden. In vielen Fällen empfiehlt es sich dabei, in Gegenwart üblicher Mengen an Schutzkolloiden, z.B. von 0,5 bis 5 Gew.-% oder Tensiden in Mengen von etwa 1 bis 10 Gew.-%, zu arbeiten. In manchen Fällen kann es auch zweckmäßig sein, zunächst die wasserunlöslichen Polymeren der Gruppe (b) nach bekannten Verfahren in wäßriger Dispersion herzustellen und anschließend ein Monomer der Gruppe (a) oder eine Mischung von Monomeren der Gruppe (a) zuzufügen. Man kann jedoch die Copolymerisation der Komponenten (a) und (b) auch in der Weise durchführen, daß man zunächst eine geringe Menge einer Mischung aus den Komponenten (a) und (b) in einem Polymerisationsbehälter vorlegt, die Copolymerisation durch Zugabe eines Initiators startet und dann die Komponenten (a) und (b) in dem jeweils gewünschten Verhältnis absatzweise oder kontinuierlich zufügt. Man kann jedoch auch so verfahren, daß man die gesamte Menge der Komponente (b) vorlegt und die Monomeren (a) absatzweise oder kontinuierlich zufügt. Man kann jedoch auch zunächst die Monomeren (a) weitgehend, d.h. bis zu 50 % polymerisieren und danach erst die Polymeren der Gruppe (b) zufügen, um erfindungsgemäße Copolymerisate zu erhalten.

Die Copolymerisation erfolgt in Gegenwart von Initiatoren, die unter den Polymerisationsbedingungen Radikale bilden. Als Radikale bildende Initiatoren kommen alle üblichen Peroxy- und Azoverbindungen in Betracht, z.B. Peroxide, Hydroperoxide, und Peroxyester; z.B. Wasserstoffperoxid, Dibenzoylperoxid, Di-t-butylperoxid, t-Butylhydroperoxid, t-Butylperpivalat und t-Butyl-peroxy-2-ethylhexanoat, sowie Azoverbindungen, beispielsweise 2,2'-Azobis(2-amidinopropan)dihydrochlorid, 2,2'-Azobis (2-methylbutyronitril), und 2,2'-Azobis [2-(2-imidazolin-2-yl) propan] dihydrochlorid. Man kann selbstverständlich auch Initiatormischungen oder die bekannten Redoxinitiatoren verwenden. Die Polymerisationstemperatur liegt vorzugsweise in dem Temperaturbereich von 60 bis 100°C. Selbstverständlich kann man auch außerhalb des angegebenen Temperaturbereiches polymerisieren, wobei man bei höheren Temperaturen, z.B. bei 120 bis 140°C die Polymerisation in druckdicht verschlossenen Apparaturen durchführt. Die Initiatoren werden in den üblichen Mengen eingesetzt, d.h. in Mengen von beispielsweise 0,2 bis 5 Gewichtsprozent, bezogen auf die zu polymerisierenden Monomeren.

Die erfindungsgemäßen Copolymerisate können durch weitere Verfahrensschritte wie Wasserdampfbehandlung oder teilweises Abdestillieren des verwendeten Lösemittels zusammen mit anderen flüchtigen Anteilen von unerwünschten Verunreinigungen befreit werden. Sie können weiteren physikalischen Behandlungsschritten wie Trokken-, Filter- oder Dispergierverfahren unterworfen werden.

Die erfindunsgemäßen Copolymerisate haben K-Werte in dem Bereich von 10 bis 350, vorzugsweise 12 bis 90 (bestimmt nach H. Fikentscher in 1 %iger Lösung in Ethanol oder N-Methylpyrrolidon bei einer Temperatur von 25°C und pH 7). In Fällen, bei denen die Verbindungen der Komponente (b) vernetzte Strukturen aufweisen, z.B. bei Polybutadiendispersionen oder bei einigen Polyestern, ist eine K-Wert-Bestimmung nicht möglich. Die Molmassen liegen in solchen Fällen oberhalb von 200 000.

Copolymerisate aus 1-Vinylpyrrolidon und Styrol sind bekannt. Sie werden üblicherweise durch Copolymerisieren von Vinylpyrrolidon und Styrol hergestellt. Für die gewünschte Anwendung geeignete Copolymerisate aus Vinylpyrrolidon und Styrol sind auch dadurch erhältlich, daß man auf ein Homopolymerisat von Styrol 1-Vinylpyrrolidon aufpfropft oder auf ein Homopolymerisat von 1-Vinylpyrrolidon Styrol aufpfropft. Dabei entstehen - ebenso wie auch bei der radikalisch initiierten Copolymerisation von Styrol und 1-Vinylpyrrolidon - Copolymerisate mit Blockstrukturen, die Blöcke von einpolymerisiertem Styrol bzw. 1-Vinylpyrrolidon enthalten.

Die oben beschriebenen Copolymerisate aus den Komponenten (a) und (b) sowie die Copolymerisate aus 1-Vinylpyrrolidon und Styrol werden als Zusatz zu Waschmitteln zur Inhibierung der Farbstoffübertragung während des Waschvorgangs verwendet. Die Waschmittel können pulverförmig sein oder auch in flüssiger Einstellung vorliegen. Die Zusammensetzung der Wasch- und Reinigungsmittelformulierungen kann sehr unterschiedlich sein. Wasch- und Reinigungsmittelformulierungen enthalten üblicherweise 2 bis 50 Gew.-% Tenside und gegebenenfalls Builder. Diese Angaben gelten sowohl für flüssige als auch für pulverförmige Waschmittel. Wasch- und Reinigungsmittelformulierungen, die in Europa, in den USA und in Japan gebräuchlich sind, findet man beispielsweise in Chemical und Engn. News, Band 67, 35 (1989) tabellarisch dargestellt. Weitere Angaben über die Zusammensetzung von Wasch- und Reinigungsmitteln können der WO-A-90/13581 sowie Ullmanns Encyklopädie der technischen Chemie, Verlag Chemie, Weinheim 1983, 4. Auflage, Seiten 63-160, entnommen werden. Die Waschmittel können gegebenenfalls noch ein Bleichmittel enthalten, z.B. Natriumperborat, das im Fall seines Einsatzes in Mengen bis zu 30 Gew.-% in der Waschmittelformulierung enthalten sein kann. Die Wasch- und Reinigungsmittel können gegebenenfalls weitere übliche Zusätze enthalten, z.B. Komplexbildner, Trübungsmittel, optische Aufheller, Enzyme, Parfümöle, andere Farbübertragungsinhibitoren, Vergrauungsinhibitoren und/oder Bleichaktivatoren.

Waschmittel auf Basis von Tensiden und gegebenenfalls Buildern sowie anderen üblichen Bestandteilen enthalten die erfindungsgemäßen Copolymerisate aus den Komponenten (a) und (b) in Mengen von 0,1 bis 10, vorzugsweise 0,25 bis 5 Gew.-%. Die Copolymerisate wirken beim Waschen von gefärbten und weißen Textilien als Farbübertragungsinhibitor.

Die Prozentangaben in den Beispielen sind Gewichtsprozent. Die K-Werte wurden nach H. Fikentscher, Cellulosechemie, Band 13, 58-64 und 71-74 (1932), in 1 %iger Lösung in Ethanol (Beispiele 8 und 9 und Copolymerisate 3 und 4 in 1 %iger Lösung in N-Methylpyrrolidon) bei einer Temperatur von jeweils 25°C und einem pH-Wert von jeweils 7 bestimmt.

## Beispiele

Als Komponente (b) wurden folgenden Polymeren eingesetzt:

### Polymer (b) Nr. 1

Methacryloyl-terminiertes Polydimethylsiloxan mit einer mittleren Molmasse ($M_w$) von 5000, Handelsprodukt der Fa. Toa Gosei Chem. Ind., Japan, unter dem Namen Makromonomer AK5.

### Polymer (b) Nr. 2

1,9 mol-% (Mercaptopropyl)methylgruppen tragendes Polydimethylsiloxan mit einer kinematischen Viskosität von 150 ctsk (bestimmt bei 20°C, Ubbelohde-Viskosimeter), Handelsprodukt der Fa. ABCR GmbH, BRD, mit dem Namen PS 849.

### Polymer (b) Nr. 3

Methacryloyl-terminiertes Kondensat aus Bisphenol A und Epichlorhydrin im Molverhältnis 1:1 mit einer Molmasse ($M_w$) von 1000, Bisphenol-A-vinylesterharz der Fa. BASF Aktiengesellschaft, BRD, mit dem Handelsnamen Palatal A 431-01.

### Polymer (b) Nr. 4

Lineares Polybutadien einer mittleren Molmasse ($M_w$) von 1800.

### Polymer (b) Nr. 5

Polykondensat aus Adipinsäure/Itaconsäure/Ethylenglykol im Molverhältnis 9:1:10 einer mittleren Molmasse ($M_w$) von 2000.

### Polymer (b) Nr. 6

Bis(mercapto)-terminiertes Polytetrahydrofuran mit einer mittleren Molmasse ($M_w$) von 1200.

### Beispiel 1

In einem 1000 ml fassenden Kolben, der mit einem Rührer und einer Vorrichtung für das Arbeiten unter Stickstoff ausgestattet war, wurden 70 g Ethanol vorgelegt und unter Stickstoffatomosphäre auf 78°C erhitzt. Sobald diese Temperatur erreicht war, wurde ein Zulauf aus 40 g Ethanol, 90 g 1-Vinylpyrrolidon und 10 g Polymer (b) Nr. 1 während 2 Stunden und ein weiterer Zulauf aus 40 g Ethanol und 1 g Dimethyl-2,2'-azobisisobutyrat während 4 Stunden zugetropft. Nach Zugabe des Polymerisationsinitiators wurde das Reaktionsgemisch noch 3 Stunden bei 78°C gerührt und dann einer Wasserdampfdestillation unterworfen. Man erhielt eine trübe Lösung mit einem Feststoffgehalt von 47 %. Der K-Wert des Polymeren betrug 52.

### Beispiel 2

Beispiel 1 wurde mit der einzigen Ausnahme wiederholt, daß man anstelle von Polymer (b) Nr. 1 jetzt 10 g Polymer (b) Nr. 2 einsetzte, man erhielt eine trübe Lösung mit einem Feststoffgehalt von 25 %. Das Polymerisat hatte einen K-Wert von 41.

Beispiel 3

Beispiel 1 wurde mit der einzigen Ausnahme wiederholt, daß man anstelle von Polymer (b) Nr. 1 jetzt 10 g Polymer (b) Nr. 3 einsetzte. Man erhielt eine trübe Lösung mit einem Feststoffgehalt von 40 %. Das Copolymerisat hatte einen K-Wert von 57.

Beispiel 4

Beispiel 1 wurde mit den Ausnahme wiederholt, daß man anstelle von Vinylpyrrolidon jetzt 70 g 1-Vinylimidazol und anstelle von Polymer (b) Nr. 1 jetzt 30 g Polymer (b) Nr. 4 einsetzte. Man erhielt eine weiße Polymerdispersion mit einem Feststoffgehalt von 27 %. Das Copolymerisat hatte einen K-Wert von 53.

Beispiel 5

Beispiel 1 wurde mit den Ausnahme wiederholt, daß man 33 g 1-Vinylpyrrolidon und 67 g Polymer (b) Nr. 4 einsetzte. Man erhielt eine weiße Polymerdispersion mit einem Feststoffgehalt von 64 %. Das Copolymerisat hatte einen K-Wert von 37.

Beispiel 6

Beispiel 1 wurde wiederholt, jedoch setzte man 70 g 1-Vinylpyrrolidon und 30 g Polymer (b) Nr. 5 ein. Man erhielt eine weiße Polymerdispersion mit einem Feststoffgehalt von 62 %. Das Copolymerisat hatte einen K-Wert von 57.

Beispiel 7

In einem 1000 ml fassenden Kolben, der mit einem Rührer und einer Vorrichtung für das Arbeiten unter Stickstoff ausgestattet war, wurden 73 g 1-Vinylpyrrolidon, 190 g 70 % wäßriges i-Propanol und 8 g von Polymer (b) Nr. 6 vorgelegt und unter Stickstoffatmosphäre auf 55°C erhitzt. Sobald diese Temperatur erreicht war, wurden 1,5 g 2,2'-Azobis(N, N'-dimethylenisobutyramid)dihydrochlorid in 20 ml Wasser zugegeben. Nach Zugabe des Initiators wurde das Polymerisationsgemisch 140 Minuten bei 55°C gerührt. Daraufhin wurden weitere 0,3 g des Starters in 10 ml Wasser zugegeben und das Reaktionsgemisch weitere 180 Minuten bei 55°C gerührt und dann einer Wasserdampfdestillation unterworfen. Man erhielt eine opaque Lösung mit einem Feststoffgehalt von 19 %. Der K-Wert des Polymeren betrug 33.

Herstellung bekannter Copolymerisate aus Vinylpyrrolidon und Styrol

Copolymerisat 1

Nach der im Beispiel 1 angegebenen Vorschrift polymerisiert man 80 g 1-Vinylpyrrolidon und 20 g Styrol. Man erhielt eine wäßrige Dispersion mit einem Feststoffgehalt von 28 %. Das Copolymerisat hatte einen K-Wert von 66.

Copolymerisat 2

Nach der im Beispiel 1 angegebenen Vorschrift polymerisierte man 70 g 1-Vinylpyrrolidon, 20 g Styrol und 10 g 3-Methyl-1-vinylimidazoliumchlorid. Man erhielt eine wäßrige Polymerdispersion mit einem Feststoffgehalt von 43 %. Das Copolymerisat hatte einen K-Wert von 30.

Vergleichsbeispiel 1

Herstellung eines statistischen Copolymerisats aus 1-Vinylpyrrolidon und Ethylacrylat

In der in Beispiel 1 beschriebenen Apparatur wurden 70 g Ethanol vorgelegt und im Stickstoffstrom auf 78°C erhitzt. Nach Erreichen dieser Temperatur wurde ein Zulauf aus 40 g Ethanol, 60 g 1-Vinylpyrrolidon und 40 g Ethylacrylat innerhalb von 2 Stunden und ein weiterer Zulauf aus 40 g Ethanol und 1 g Dimethyl-2,2'-azobisisobutyrrat innerhalb von 4 Stunden zugetropft. Das Reaktionsgemisch wurde noch 3 Stunden nach Beendigung der Initiatorzugabe bei 78°C gerührt und anschließend einer Wasserdampfdestillation unterworfen. Man erhielt eine weiße Polymerdispersion mit einem Feststoffgehalt von 47 %. Das Copolymerisat hatte einen K-Wert von 47.

Copolymerisat 3

In einem mit einem Rührer und einer Vorrichtung für das Arbeiten unter Stickstoff ausgestattetem Kolben wurden 200 g entionisiertes Wasser, 100 g 1-Vinylpyrrolidon, 2 g Polyvinylpyrrolidon mit einem K-Wert von 30 und 3 g Emulgator 1 (mit Natronlauge neutralisierter Schwefelsäureester eines Anlagerungsprodukts von 2 Mol Ethylenoxid an 1 Mol Laurylalkohol) unter Stickstoffatmosphare auf 75°C erhitzt. Nachdem diese Temperatur erreicht war, wurde ein Zulauf aus einer Mischung von 100 g Styrol, 100 g Wasser und 7 g Emulgator 1 innerhalb von 3 Stunden und gleichzeitig ein weiterer Zulauf aus einer Lösung von 2 g Natriumpersulfat in 50 g Wasser innerhalb von 5 Stunden zugetropft. Nach 1-stündiger Zulaufzugabe wurde die Reaktionstemperatur auf 95°C erhöht und das Reaktionsgemisch insgesamt noch 8 Stunden bei dieser Temperatur gerührt und anschließend 2 Stunden lang einer Wasserdampfdestillation unterworfen. Man erhielt eine Dispersion mit einem Feststoffgehalt von 26 %. Das Copolymerisat hatte einen K-Wert von 47.

Copolymerisat 4

In der in Beispiel 8 beschriebenen Apparatur wurden 325 g entionisiertes Wasser, 30 g Polyvinylpyrrolidon vom K-Wert 30, 85 g Styrol, 1,25 g Emulgator 1, 1 g Emulgator 2 (Additionsprodukt von 11 Mol Ethylenoxid an 1 Mol eines $C_{13}/C_{15}$-Fettalkohols) und 0,5 g Kaliumperoxodisulfat vorgelegt und unter Stickstoffatmosphäre 2 Stunden bei einer Temperatur von 80°C gerührt. Anschließend fügte man 4,5 g Emulgator 2 zu und gab dann innerhalb von 2 Stunden eine Mischung aus 45 g Styrol, 45 g 1-Vinylpyrrolidon und eine Lösung von 0,5 g Kaliumperoxodisulfat in 20 g Wasser gleichzeitig zu. Die Reaktionsmischung wurde weitere 2 Stunden bei 80°C gerührt und anschließend durch ein Leinentuch filtriert. Man erhielt eine weiße Dispersion mit einem Feststoffgehalt von 36 % und einem mittleren Teilchendurchmesser von 134 nm.

Beispiel 8

In einer mit einem Rührer und für das Arbeiten unter Stickstoff versehenen Vorrichtung wurden 125 g einer Polybutadiendispersion mit einem Feststoffgehalt von 40 % und einer mittleren Teilchengröße von 90 nm gemäß der Lehre der DE-C-24 27 960, mit 150 g entionisiertem Wasser, 5 g 1-Vinylpyrrolidon und 50 mg 2,2'-Azo-bis(amidinopropan) dihydrochlorid versetzt und unter einer Stickstoffatmosphäre auf 65°C erwärmt. Bei dieser Temperatur wurden dann 45 g 1-Vinylpyrrolidon innerhalb von 1,5 Stunden und gleichzeitig damit 1 g 2,2'-Azobis(amidinopropan)dihydrochlorid in 30 ml Wasser innerhalb von 2 Stunden zugetropft. Nach insgesamt 3 Stunden nach Beginn der Zuläufe wurde die Temperatur des Reaktionsgemisches für 2 Stunden auf 70°C erhöht. Danach wurde das Reaktionsgemisch 2 Stunden einer Wasserdampfdestillation unterworfen. Man erhielt eine weiße Dispersion mit einem Feststoffgehalt von 24 %. Das Copolymerisat hatte einen K-Wert von 53.

Beispiel 9

In der in Beispiel 10 angegebenen Apparatur wurden 110 g einer mit 4 g Kaliumoleat stabilisierten Butadien-Styrol-Dispersion mit einem Butadien-Styrol-Verhältnis von 3:1, einem Feststoffgehalt von 47 % und einer mittleren Teilchengröße von 70 nm, und 5 g 1-Vinylpyrrolidon vorgelegt und aus 70°C unter Stickstoffatmosphäre erwärmt. Sobald das Reaktionsgemisch diese Temperatur erreicht hatte, gab man 45 g 1-Vinylpyrrolidon in 50 ml Wasser innerhalb von 2 Stunden und getrennt davon eine Lösung von 1 g 2,2'-Azobis(amidinopropan)dihydrochlorid in 30 ml Wasser innerhalb von 3 Stunden zu. Das Reaktionsgemisch wurde nach Beendigung der Initiatorzugabe weitere 3 Stunden bei 70°C gerührt und anschließend einer Wasserdampfdestillation unterworfen. Man erhielt eine weiße Dispersion mit einem Feststoffgehalt von 17 %. Das Copolymerisat hatte einen K-Wert von 44.

Adsorptionstest

Geprüft wird das Adsorptionsverhalten der in Tabelle 1 angegebenen Polymeren am Belebtschlamm einer biologischen Kläranlage. Das Polymer wird jeweils in einer wäßrigen Belebtschlammsuspension gelöst. Die Konzentration des Polymers beträgt mindestens 100 mg/l, bezogen auf den gelösten organisch gebundenen Kohlenstoff (DOC). Die Belebtschlammkonzentration beträgt 1 g/l, bezogen auf das Trockengewicht. Nach 48 h wird der DOC nach Absetzen des Schlammes in der überstehenden Lösung gemessen. Feine Belebtschlammpartikel werden vor der DOC-Messung entfernt.

$$\text{Eliminationsgrad in \%} = \frac{\text{DOC (Ausgangswert) - DOC (Endwert)}}{\text{DOC (Ausgangswert)}} \times 100$$

Folgende Ergebnisse wurden erhalten:

Tabelle 1

| Polymer hergestellt nach Beispiel | Eliminationsgrad |
|---|---|
| 4 | 53 |
| Copolymer 1 | 37 |
| 8 | 59 |
| 9 | 41 |
| Polyvinylpyrrolidon (K-Wert 30) | < 5 |

Die Beispiele belegen, daß die erfindungsgemäßen Polymere ein deutlich verbessertes Eliminationsverhalten am Klärschlamm als Polyvinylpyrrolidon aufweisen.

Anwendungstechnische Beispiele

Waschversuche

Zur Prüfung der Wirksamkeit wurde weißes Prüfgewebe gemeinsam mit eingefärbten Textilproben aus Baumwolle im Launderometer gewaschen. Die Messung der aufgetretenen Farbstoffübertragung erfolgte photometrisch. Aus den an den einzelnen Prüfgeweben gemessenen Remissionswerten wurden die jeweiligen Farbstärken bestimmt, aus denen sich die Wirksamkeit der Polymeren ableiten läßt. Eine Wirksamkeit von 100 % bedeutet, daß das Testergewebe seine ursprüngliche Farbstärke beibehielt, es also nicht angefärbt wurde. Eine Wirksamkeit von 0 % wird bei einem Prüfgewebe ermittelt, das die gleiche Farbstärke aufweist wie ein Prüflappen, der ohne Zusatz eines farbstoffübertragungsverhindernden Additivs gewaschen wurde.

Die Textilproben wurden mit folgenden Farbstoffen gefärbt:

C.I. Direkt Schwarz 51 (constitution number 27720), C.I. Direkt Blau 218 (24401), C.I. Direkt Rot 79 (29065), C.I. Direkt Schwarz 22 (35435), C.I. Direkt Blau 71 (34140), C.I. Reaktiv Schwarz 5 (20505).

| Waschbedingungen | |
|---|---|
| Waschgerät | Launderometer |
| Waschzyklen | 1 |
| Temperatur | 60°C |
| Waschdauer | 30 min |
| Wasserhärte | 3 mmol $Ca^{2+}$, $Mg^{2+}$ (4:1)/l |
| Prüfgewebe | Baumwolle |
| Flottenverhältnis | 1 : 50 |
| Flottenmenge | 250 ml |
| Waschmittelkonzentration | 7,0 g/l |

| Waschmittelzusammensetzung [%] | |
|---|---|
| Zeolith A | 20 |
| Natriumcarbonat | 11 |
| Dodecylbenzolsulfonat | 5 |
| Seife | 1,3 |
| $C_{13}/C_{15}$ - Oxoalkohol x 7 Ethylenoxid-Einheiten | 3,9 |
| Acrylsäure/Maleinsäure-Copolymerisat 70/30, Na-Salz, MG = 70000 | 2,7 |
| Na-Carboxymethylcellulose | 0,4 |
| Wasser | 7,0 |
| Polymer gemäß Tabelle 2 | 1,0 |
| Natriumsulfat | auf 100 |

Tabelle 2

| Polymer hergestellt nach Beispiel: | 1 | 2 | 3 | 4 | 5 | 6 | 7 | 8 | 9 | Copolymerisat 1 | Copolymerisat 2 | Copolymerisat 3 | Copolymerisat 4 | Vergleichsbeispiel 1 |
|---|---|---|---|---|---|---|---|---|---|---|---|---|---|---|
| Direkt Schwarz 51 | 31,1 | 30,4 | 33,7 | 32,8 | 26,2 | 24,9 | 35,7 | 27,7 | 30,1 | 25,7 | 29,3 | 26,5 | 25,8 | 10,8 |
| Direkt Blau 218 | 29,4 | 34,4 | 30,5 | 89,0 | 23,2 | 34,8 | 38,2 | 32,0 | 22,7 | 18,5 | 31,2 | 24,2 | 28,9 | 10,8 |
| Direkt Rot 79 | 78,8 | 84,0 | 80,6 | 85,2 | 71,8 | 73,3 | 82,2 | 78,6 | 68,2 | 69,6 | 70,3 | 69,3 | 64,1 | 31,2 |
| Direkt Schwarz 22 | 76,6 | 79,3 | 81,0 | 80,9 | 74,3 | 71,1 | 82,3 | 73,4 | 71,1 | 79,5 | 78,4 | 75,8 | 68,6 | 27,8 |
| Direkt Blau 71 | 96,9 | 97,2 | 97,1 | 97,5 | 90,7 | 91,7 | 97,6 | 96,1 | 91,9 | 93,8 | 92,7 | 91,2 | 91,7 | 43,6 |

Die Ergebnisse der Tabelle 2 zeigen, daß die erfindungsgemäßen Polymeren eine deutlich höhere Wirksamkeit als vergleichsbare Polymere mit einem ähnlichen Anteil einer wenig wasserlöslichen Komponente, wie z.B. Vergleichsbeispiel 1, besitzen.

**Patentansprüche**

1. Copolymerisate, die erhältlich sind durch radikalisch initiierte Copolymerisation von Mischungen aus

   (a) 20 bis 95 Gew.-% 1-Vinylpyrrolidon, 1-Vinylimidazolen der Formel (I)

   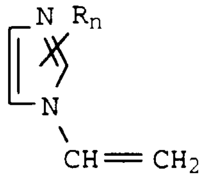

   (I),

   in der

   R = H, $CH_3$, $C_2H_5$ und
   n = 1 bis 3,

   deren Gemische sowie Mischungen aus 1-Vinylpyrrolidon und/oder 1-Vinylimidazolen der Formel I, die bis zu 20 Gew.-% andere monoethylenisch ungesättigte Monomere enthalten, und

   (b) 5 bis 80 Gew.-% wasserunlöslichen Polymeren aus der Gruppe der ungesättigten Polyester, der Homopolymerisate des Butadiens, der Copolymerisate von Butadien mit Styrol, Acrylnitril, Acrylestern von Alkoholen mit 1 bis 8 Kohlenstoffatomen, Isopren, Vinylethern mit 1 bis 18 C-Atomen in der Alkylkette und Acrylsäure, der Mercaptoalkylgruppen tragenden Polysiloxane und der Bis(thiol)-polytetrahydrofurane.

2. Verfahren zur Herstellung von Copolymerisaten nach Anspruch 1, dadurch gekennzeichnet, daß man

   (a) 20 bis 95 Gew.-% 1-Vinylpyrrolidon, 1-Vinylimidazole der Formel I, deren Gemische oder Mischungen aus 1-Vinylpyrrolidon und/oder 1-Vinylimidazolen, die bis zu 20 Gew.-% andere monoethylenisch ungesättigte Monomere enthalten, und

   (b) 5 bis 80 Gew.-% wasserunlöslichen Polymeren aus der Gruppe der ungesättigten Polyester, der Homopolymerisate des Butadiens, der Copolymerisate von Butadien mit Styrol, Acrylnitril, Acrylestern von Alkoholen mit 1 bis 8 Kohlenstoffatomen, Isopren, Vinylethern mit 1 bis 18 C-Atomen in der Alkylkette und Acrylsäure, der Mercaptoalkylgruppen tragenden Polysiloxane und der Bis(thiol)-polytetrahydrofurane

   in Wasser, Alkoholen, Estern oder Ketonen mit Siedepunkten von jeweils unterhalb von 135°C oder Mischungen der genannten Lösemittel in Gegenwart Radikale bildender Initiatoren sowie gegebenenfalls von Schutzkolloiden und Tensiden copolymerisiert.

3. Verwendung von Copolymerisaten, die erhältlich sind durch radikalisch initiierte Copolymerisation von Mischungen aus

   (a) 20 bis 95 Gew.-% 1-Vinylpyrrolidon, 1-Vinylimidazolen der Formel (I)

   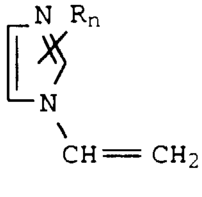

   (I),

   in der

R = H, $CH_3$, $C_2H_5$ und
n = 1 bis 3,

deren Gemische sowie Mischungen aus 1-Vinylpyrrolidon und/oder 1-Vinylimidazolen der Formel I, die bis zu 20 Gew.-% andere monoethylenisch ungesättigte Monomere enthalten, und

(b) 5 bis 80 Gew.-% wasserunlöslichen Polymeren, die mindestens eine ethylenisch ungesättigte Doppelbindung und/ oder eine Mercaptogruppe im Molekül enthalten,

als Zusatz zu Waschmitteln zur Inhibierung der Farbstoffübertragung während des Waschvorgangs.

**4.** Waschmittel auf Basis von Tensiden und gegebenenfalls Buildern sowie anderen üblichen Bestandteilen, dadurch gekennzeichnet, daß sie 0,1 bis 10 Gew.-% eines Copolymerisats, das herstellbar ist durch radikalisch initiierte Copolymerisation von Mischungen aus

(a) 20 bis 95 Gew.-% 1-Vinylpyrrolidon, 1-Vinylimidazolen der Formel (I)

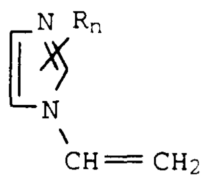

(I),

in der

R = H, $CH_3$, $C_2H_5$ und
n = 1 bis 3,

deren Gemische sowie Mischungen aus 1-Vinylpyrrolidon und/oder 1-Vinylimidazolen der Formel I, die bis zu 20 Gew.-% andere monoethylenisch ungesättigte Monomere enthalten, und

(b) 5 bis 80 Gew.-% wasserunlöslichen Polymeren aus der Gruppe der ungesättigten Polyester, der Homopolymerisate des Butadiens, der Copolymerisate von Butadien mit Styrol, Acrylnitril, Acrylestern von Alkoholen mit 1 bis 8 Kohlenstoffatomen, Isopren, Vinylethern mit 1 bis 18 C-Atomen in der Alkylkette und Acrylsäure, der Mercaptoalkylgruppen tragenden Polysiloxane und der Bis(thiol)-polytetrahydrofurane.

## Claims

**1.** A copolymer which is obtainable by free radical copolymerization of a mixture of

(a) from 20 to 95 % by weight of 1-vinylpyrrolidone, a 1-vinylimidazole of the formula (I)

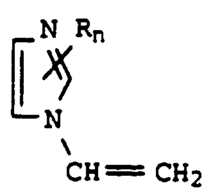

(I)

where R is H, $CH_3$ or $C_2H_5$ and n is from 1 to 3, a mixture thereof or a mixture of 1-vinylpyrrolidone or 1-vinylimidazoles of the formula I which contains up to 20% by weight of other monoethylenically unsaturated monomers, and
(b) from 5 to 80% by weight of water-insoluble polymers selected from the group consisting of unsaturated polyesters, homopolymers of butadiene, copolymers of butadiene with styrene, acrylonitrile, acrylates of alcohols of 1 to 8 carbon atoms, isoprene, vinyl ethers where the alkyl chain is of 1 to 18 carbon atoms and acrylic acid, mercaptoalkyl-carrying polysiloxanes and bis(thiol)polytetrahydrofurans.

**2.** A process for the preparation of a copolymer as claimed in claim 1, which comprises copolymerizing a

(a) from 20 to 95% by weight of 1-vinylpyrrolidone, or 1-vinylimidazole of the formula I, a mixture thereof or a mixture of 1-vinylpyrrolidone or a 1-vinylimidazole which contains up to 20% by weight of other monoethylenically unsaturated monomers and
(b) from 5 to 80% by weight of water-insoluble polymers selected from the group consisting of unsaturated polyesters, homopolymers of butadiene, copolymers of butadiene with styrene, acrylonitrile, acrylates of alcohols of 1 to 8 carbon atoms, isoprene, vinyl ethers where the alkyl chain is of 1 to 18 carbon atoms and acrylic acid, mercaptoalkyl-carrying polysiloxanes and bis(thiol)polytetrahydrofurans,

in water, an alcohol, an ester or a ketone, each having a boiling point below 135°C, or a mixture of the stated solvents, in the presence of free radical initiators and in the presence or absence of protective colloids and surfactants.

**3.** Use of a copolymer which is obtainable by free radical copolymerization of a mixture of

(a) from 20 to 95 % by weight of 1-vinylpyrrolidone, a 1-vinylimidazole of the formula (I)

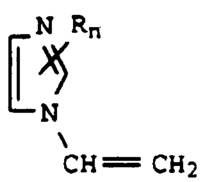

(I)

where R is H, $CH_3$ or $C_2H_5$ and n is from 1 to 3, a mixture thereof or a mixture of 1-vinylpyrrolidone or 1-vinylimidazoles of the formula I which contains up to 20% by weight of other monoethylenically unsaturated monomers, and
(b) from 5 to 80% by weight of water-insoluble polymers which contain at least one ethylenically unsaturated double bond or one mercapto group in the molecule,

as an additive for detergents for inhibiting dye transfer during the wash process.

**4.** A detergent based on surfactants and, if required, builders and other conventional components, which contains from 0.1 to 10% by weight of a copolymer which can be prepared by free radical copolymerization of a mixture of

(a) from 20 to 95 % by weight of 1-vinylpyrrolidone, a 1-vinylimidazole of the formula (I)

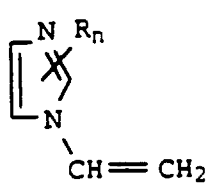

(I)

where R is H, $CH_3$ or $C_2H_5$ and n is from 1 to 3, a mixture thereof or a mixture of 1-vinylpyrrolidone or 1-vinylimidazoles of the formula I which contains up to 20% by weight of other monoethylenically unsaturated monomers, and
(b) from 5 to 80% by weight of water-insoluble polymers selected from the group consisting of unsaturated polyesters, homopolymers of butadiene, copolymers of butadiene with styrene, acrylonitrile, acrylates of alcohols of 1 to 8 carbon atoms, isoprene, vinyl ethers where the alkyl chain is of 1 to 18 carbon atoms and acrylic acid, mercaptoalkyl-carrying polysiloxanes and bis(thiol)polytetrahydrofurans.

**Revendications**

1. Copolymères, qui sont obtenus par copolymérisation radicalaire de mélanges de

a) 20 à 95% en poids de 1-vinylpyrrolidone, de 1-vinylimidazoles de formule (I)

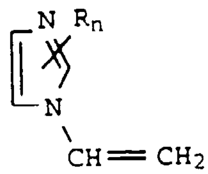

(I),

dans laquelle

R = H, $CH_3$, $C_2H_5$ et
n = 1 à 3,

de leurs mélanges, ainsi que de mélanges de 1-vinylpyrrolidone et/ou de 1-vinylimidazoles de formule I qui contiennent jusqu'à 20% en poids d'autres monomères à insaturation monoéthylénique, et
b) 5 à 80% en poids de polymères insolubles dans l'eau, du groupe des polyesters insaturés, des homopolymères du butadiène, des copolymères de butadiène et de styrène, d'acrylonitrile, d'esters acryliques d'alcools à 1-8 atomes de carbone, d'isoprène, d'oxydes de vinyle à 1-18 atomes de carbone dans la chaîne alkyle et d'acide acrylique, des polysiloxanes portant des groupements mercaptoalkyle et des bis(thiol)-polytétrahydrofurannes.

2. Procédé de préparation de copolymères selon la revendication 1, caractérisé en ce que l'on copolymérise

a) 20 à 95% en poids de 1-vinylpyrrolidone, de 1-vinylimidazoles de formule I, de leurs mélanges ou de mélanges de 1-vinylpyrrolidone et/ou de 1-vinylimidazoles qui contiennent jusqu'à 20% en poids d'autres monomères à insaturation monoéthylénique, et
b) 5 à 80% en poids de polymères insolubles dans l'eau, du groupe des polyesters insaturés, des homopolymères du butadiène, des copolymères de butadiène et de styrène, d'acrylonitrile, d'esters acryliques d'alcools à 1-8 atomes de carbone, d'isoprène, d'oxydes de vinyle à 1-18 atomes de carbone dans la chaîne alkyle et d'acide acrylique, des polysiloxanes portant des groupements mercaptoalkyle et des bis(thiol)-polytétrabydrofurannes,

dans de l'eau, des alcools, des esters ou des cétones ayant chacun un point d'ébullition inférieur à 135°C ou dans des mélanges de ces solvants, en présence d'amorceurs formant des radicaux, ainsi éventuellement que de colloïdes protecteurs et de tensio-actifs.

3. Utilisation de copolymères, qui sont obtenus par copolymérisation radicalaire de mélanges de

a) 20 à 95% en poids de 1-vinylpyrrolidone, de 1-vinylimidazoles de formule (I)

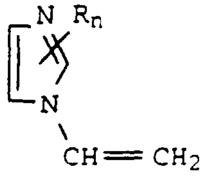

(I),

dans laquelle

R = H, $CH_3$, $C_2H_5$ et
n = 1 à 3,

de leurs mélanges, ainsi que de mélanges de 1-vinylpyrrolidone et/ou de 1-vinylimidazoles de formule I qui contiennent jusqu'à 20% en poids d'autres monomères à insaturation monoéthylénique, et
b) 5 à 80% en poids de polymères insolubles dans l'eau, qui contiennent au moins une double liaison à insaturation éthylénique et/ou un groupement mercapto dans la molécule,

comme additif à des produits de lavage, destiné à l'inhibition du transfert de colorants pendant le processus de lavage.

**4.** Produits de lavage à base de tensio-actifs et éventuellement d'adjuvants de lavage ainsi que d'autres constituants usuels, caractérisés en ce qu'ils contiennent 0,1 à 10% en poids d'un copolymère qui peut être préparé par copolymérisation radicalaire de mélanges de

a) 20 à 95% en poids de 1-vinylpyrrolidone, de 1-vinylimidazoles de formule (I)

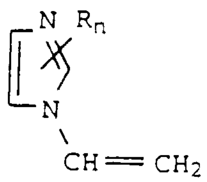

(I),

dans laquelle

R = H, $CH_3$, $C_2H_5$ et
n = 1 à 3,

de leurs mélanges, ainsi que de mélanges de 1-vinylpyrrolidone et/ou de 1-vinylimidazoles de formule I qui contiennent jusqu'à 20% en poids d'autres monomères à insaturation monoéthylénique, et
b) 5 à 80% en poids de polymères insolubles dans l'eau, du groupe des polyesters insaturés, des homopolymères du butadiène, des copolymères de butadiène et de styrène, d'acrylonitrile, d'esters acryliques d'alcools à 1-8 atomes de carbone, d'isoprène, d'oxydes de vinyle à 1-18 atomes de carbone dans la chaîne alkyle et d'acide acrylique, des polysiloxanes portant des groupements mercaptoalkyle et des bis(thiol)-polytétrahydrofurannes.